# EUROPEAN PATENT SPECIFICATION

(11) **EP 2 769 822 B1**
(45) Date of publication and mention of the grant of the patent: **01.04.2020**
(21) Application number: 14153780.3
(22) Date of filing: 04.02.2014
(51) Int. Cl.: B29C 45/82, B29C 45/67

(54) **Injection molding machine**
Spritzgießmaschine
Machine de moulage à injection

(30) Priority: 26.02.2013 JP 2013036298
(43) Date of publication of application: 27.08.2014
(73) Proprietor: SUMITOMO HEAVY INDUSTRIES, LTD., Tokyo 141-6025 (JP)
(72) Inventor: Hatakeyama, Takuro, Chiba-shi Chiba, 263-0001 (JP); Tatsumi, Yutaka, Chiba-shi Chiba, 263-0001 (JP); Hayakawa, Masahiro, Chiba-shi Chiba, 263-0001 (JP)
(74) Representative: Hoffmann Eitle

(56) References cited:
- EP-A1- 1 813 413
- JP-A- H06 159 301

## Description

### BACKGROUND

### 1. Technical Field

The disclosures herein generally relate to an injection molding machine.

### 2. Description of Related Art

An injection molding machine is provided with a hydraulic pump for generating hydraulic pressure that is supplied to a hydraulic actuator such as a hydraulic cylinder (for example, an oil hydraulic cylinder), a hydraulic pressure motor (for example, an oil hydraulic motor), or the like (see, for example, Patent Document 1).

### [Related-Art Documents]

### [Patent Documents]

[Patent Document 1] Japanese Unexamined Patent Publication No. 2006-62244
An operating fluid suctioned from a tank by such a hydraulic pump includes a lot of bubbles, which generates considerable vibration and loud noise.

A further document is EP 1 813 413 A1 referring to an injection molding machine, wherein a hydraulic actuator and a hydraulic pump are arranged close to each other to make a hydraulic pipe as short as possible so as to improve the possibility for maintenance and improve reliability of a hydraulic drive part.

A further document is JP H06 15 93 01 A, which teaches to prevent the entry of bubbles into oil so as to maintain stable operating characteristic of a hydraulically operated body, prevent oil leakage and carry out easily maintenance such as inspection replacement of a valve, a hydraulic pump and a like.

### SUMMARY

It is desirable, in the light of these circumstances, to provide an injection molding machine that can reduce such vibration and noise of a hydraulic pump.

According to the present invention, an injection molding machine includes the features of independent claim 1.

According to the present invention, it is possible to provide an injection molding machine that can reduce such vibration and noise of a hydraulic pump.

### BRIEF DESCRIPTION OF THE DRAWINGS

FIG. 1 is a schematic view illustrating an injection molding machine according to an embodiment of the present invention;
FIG. 2 is a schematic view illustrating a movement unit according to an embodiment of the present invention;
FIG. 3 is a schematic view illustrating a modified example of a hydraulic unit (not part of the invention); and
FIG. 4 is a schematic view illustrating a modified example of a mold clamping unit.

### DETAILED DESCRIPTION

In the following, embodiments of the present invention will be described with reference to the drawings. The same or corresponding elements across the drawings are assigned the same or corresponding numerical codes, and their description may not be repeated.

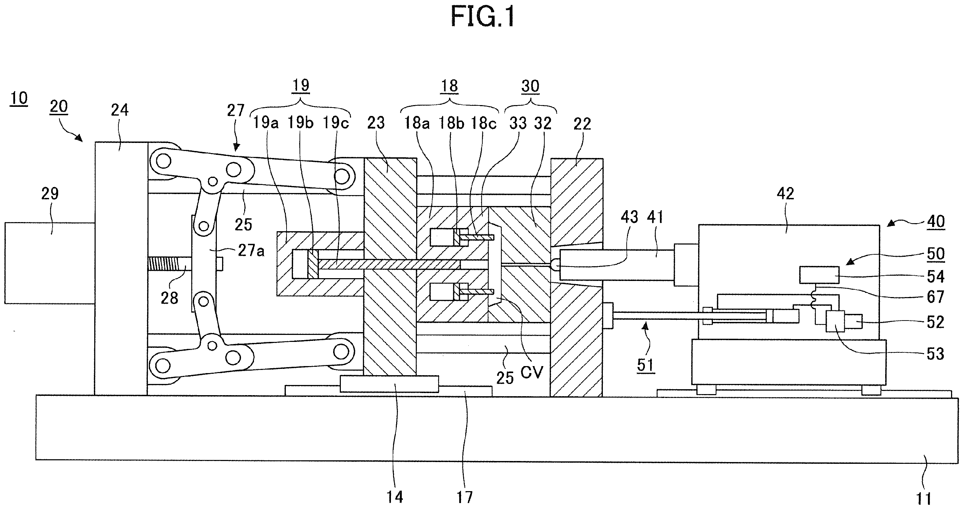

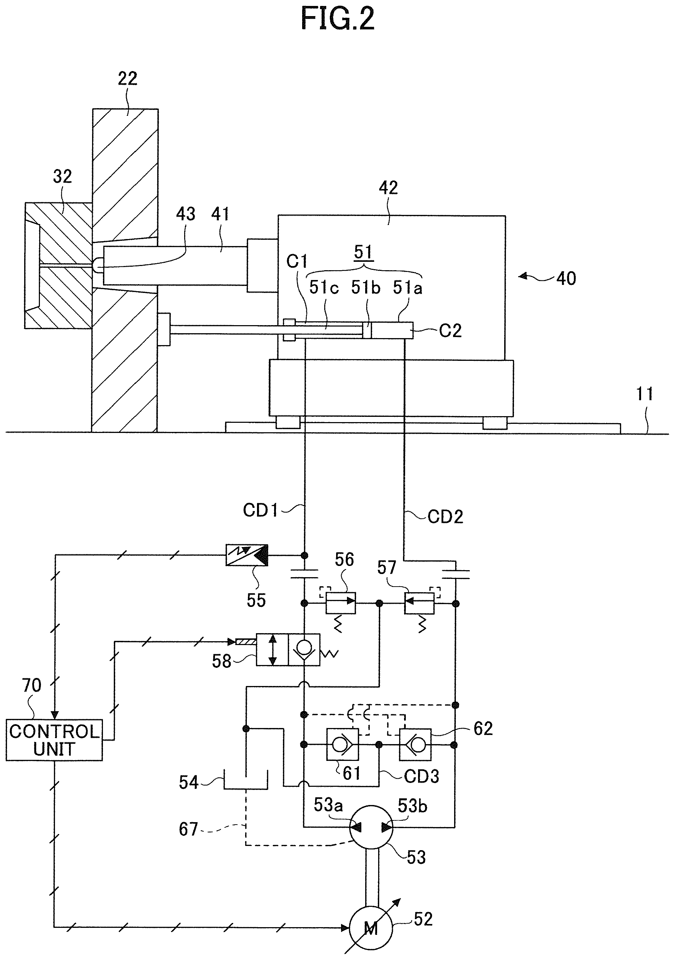

FIG. 1 is a schematic view illustrating an injection molding machine 10 according to an embodiment of the present invention. As illustrated in FIG. 1, the injection molding machine 10 includes, for example, a mold clamping unit 20, an injection unit 40, a movement unit 50, a control unit 70 (see FIG. 2), and the like.

The mold clamping unit 20 is configured with, for example, a stationary platen 22, a movable platen 23, a rear platen 24, tie bars 25, a toggle mechanism 27, a mold clamping motor 29, and the like. When describing the mold clamping unit 20, the moving direction of the movable platen 23 during a mold closing process is referred to as the front, and the moving direction of the movable platen 23 during a mold opening process is referred to as the rear.

The stationary platen 22 may be fixed on a frame 11. The rear platen 24 is disposed with a certain amount of spacing with the stationary platen 22. The rear platen 24 and the stationary platen 22 are interconnected with multiple (for example, four) tie bars 25. To allow the tie bars 25 extending during mold clamping, the rear platen 24 is placed so that it can move back and forth relative to the frame 11.

The movable platen 23 is disposed between the stationary platen 22 and the rear platen 24. The movable platen 23 is fixed on a block 14, and a guide 17 is set on the frame 11 that leads movement of the block 14. The movable platen 23 moves relative to the frame 11 with the block 14 to move close to or away from the stationary platen 22.

A movable mold 33 is attached to the movable platen 23 on a surface facing to the stationary platen 22. On the other hand, a stationary mold 32 is attached to the stationary platen 22 on a surface facing to the movable platen 23. A mold unit 30 is configured with the stationary mold 32 and the movable mold 33. Mold closing, mold clamping, and mold opening are performed by having the movable mold 33 move relative to the stationary mold 32.

The toggle mechanism 27 is disposed between the movable platen 23 and the rear platen 24. The toggle mechanism 27 is configured with, for example, a crosshead 27a that is movable back and forth relative to the frame 11, and multiple links that transfer a thrust input at the crosshead 27a to the movable platen 23.

The mold clamping motor 29 includes a ball screw mechanism as a motion conversion part that converts rotational motion into linear motion to operate the toggle mechanism 27 by moving a driving shaft 28 back and forth so that the crosshead 27a moves back and forth.

By driving the mold clamping motor 29 to move the crosshead 27a back and forth, the movable platen 23 is moved back and forth, and mold closing, mold clamping, and mold opening are performed. A cavity space CV is formed between the stationary mold 32 and the movable mold 33 in a clamped mold state. The injection unit 40 injects a liquid molding material (for example, a molten resin) to fill the cavity space CV, which material is solidified to form a molding product.

A compression cylinder 18 is a hydraulic actuator for compressing the molding material in the cavity space CV. The compression cylinder 18 includes a cylinder-shaped main body 18a of the compression cylinder formed on the movable mold 33, a compression piston 18b that divides a space in the main body 18a of the compression cylinder into a front chamber and a rear chamber, and a compression rod 18c that moves with the compression piston 18b.

When an operating fluid is supplied into the rear chamber in the main body 18a of the compression cylinder, and the operating fluid is discharged from the front chamber in the main body 18a of the compression cylinder, the compression rod 18c moves forward to compress a liquid molding material in the cavity space CV. After the molding material is solidified, when the operating fluid is supplied into the front chamber of the main body 18a of the compression cylinder, and the operating fluid is discharged from the rear chamber of the main body 18a of the compression cylinder, the compression rod 18c moves backward to return to a start position for compression.

An ejector cylinder 19 is a hydraulic actuator for ejecting a molding product from the movable mold 33. The ejector cylinder 19 includes a cylinder-shaped main body 19a of the ejector cylinder attached to the movable platen 23, an ejector piston 19b that divides a space in the main body 19a of the ejector cylinder into a front chamber and a rear chamber, and an ejector rod 19c that moves with the ejector piston 19b. The ejector rod 19c is movable along a through-hole formed through the movable platen 23.

When the operating fluid is supplied into the rear chamber in the main body 19a of the ejector cylinder, and the operating fluid is discharged from the front chamber of the main body 19a of the ejector cylinder, the ejector rod 19c moves forward to eject a molding product from the movable mold 33. After that, when the operating fluid is supplied into the front chamber of the main body 19a of the ejector cylinder, and the operating fluid is discharged from the rear chamber of the main body 19a of the ejector cylinder, the ejector rod 19c moves backward to return to a start position for ejection.

The injection unit 40 melts the molding material and injects the molten molding material into the mold unit 30 to inject the molding material to fill the cavity space CV. The injection unit 40 includes a cylinder-shaped injection cylinder 41 for injecting the molding material to fill the cavity space CV, an injection frame 42 for holding the injection cylinder 41, and the like. The injection frame 42 is movable relative to the frame 11 so that a nozzle 43 formed at the tip of the injection cylinder 41 can move close to or away from the mold unit 30.

The movement unit 50 includes a movement cylinder 51 as a hydraulic actuator that moves the injection unit 40 relative to the frame 11. The movement cylinder 51, as illustrated in FIG. 2, includes a cylinder-shaped main body 51a of the movement cylinder, a movement piston 51b that divides a space in the main body 51a of the movement cylinder into a first chamber and a second chamber, and a movement rod 51c fixed to the movement piston 51b. The main body 51a of the movement cylinder is fixed at the injection frame 42 to move with the injection unit 40. The tip of the movement rod 51c is fixed to the stationary platen 22. By supplying the operating fluid into one of the first chamber and the second chamber that are divided by the movement piston 51b, the movement cylinder 51 extends or retracts to move the injection unit 40 relative to the frame 11.

Next, operation of the injection molding machine 10 configured as above will be described. The injection molding machine 10 has a cycle of processes including a mold closing process for closing the mold unit 30; a mold clamping process for clamping the mold unit 30; a nozzle contact process for pressing the nozzle 43 of the injection unit 40 against the mold unit 30 in a clamped mold state; a filling process for injecting the liquid molding material into the mold unit 30 from the nozzle 43 of the injection unit 40; a hold pressure process for applying pressure to the poured molding material; a cooling process for solidifying the molding material in the mold unit 30 after the hold pressure process; a plasticizing process for plasticizing the molding material for the next molding; a mold opening process for opening the mold unit 30; and an ejection process for ejecting a molding product from the mold unit 30 after the mold opening process. The cycle is repeated for manufacturing molding products. During the mold clamping process, the filling process and the hold pressure process are performed, and a compression process is performed for compressing the molding material in the mold unit 30 with the compression cylinder 18. To shorten the molding cycle, the plasticizing process may be performed during the cooling process.

In the mold closing process, the mold clamping motor 29 is driven to move the crosshead 27a forward for operating the toggle mechanism 27. The movable platen 23 is moved forward, and the movable mold 33 and the stationary mold 32 come into contact with each other, which completes mold closing.

In the mold clamping process, a mold clamping force is generated with a thrust by the mold clamping motor 29 that is multiplied by a toggle factor. A cavity space CV is formed between the stationary mold 32 and the movable mold 33 in a clamped mold state.

In the nozzle contact process, the movement cylinder 51 is driven to move the injection unit 40 close to the stationary mold 32. After the nozzle 43 of the injection unit 40 comes into contact with the stationary mold 32, the movement cylinder 51 generates a force for pressing the nozzle 43 against the stationary mold 32 (nozzle contact force). This makes it possible to prevent the molding material from leaking between the stationary mold 32 and the nozzle 43 during the filling process and the hold pressure process.

Release of the nozzle contact force is performed after the hold pressure process and before the mold opening process. It prevents the stationary mold 32 and the stationary platen from being deformed after mold opening. After the release of the nozzle contact force, the movement cylinder 51 may separate the nozzle 43 from the stationary mold 32.

In the compression process, the compression cylinder 18 is driven to press the compression rod 18c against the molding material filling the cavity space CV for compressing the molding material. Compression of the molding material is released after the molding material is solidified before the mold opening process. After that, the compression cylinder 18 is driven so that the compression rod 18c returns to a start position for compression.

In the mold opening process, the mold clamping motor 29 is driven to move the crosshead 27a backward for operating the toggle mechanism 27. The movable platen 23 is moved backward to perform mold opening.

In the ejection process, the ejector cylinder 19 is driven to move the ejector rod 19c forward for ejecting a molding product from the movable mold 33. After ejecting the molding product, the ejector cylinder 19 is driven so that the ejector rod 19c returns to a start position for ejection.

Here, although the ejector rod 19c according to the present embodiment comes into contact with the molding product for ejecting a molding product from the movable mold 33, the molding product may be ejected via an ejector plate or an ejector pin disposed on the movable mold 33.

FIG. 2 is a schematic view illustrating the movement unit 50 according to an embodiment of the present invention. Here, for describing the movement unit 50, a direction in which the nozzle 43 moves close to the stationary mold 32 is referred to as the front, and the opposite direction in which the nozzle 43 moves away from the stationary mold 32 is referred to as the rear.

The movement unit 50 includes a motor 52, a hydraulic pump 53, a tank 54, a pressure sensor 55, a first relief valve 56, a second relief valve 57, a switching valve 58, a first check valve 61, and a second check valve 62, in addition to a movement cylinder 51.

The motor 52 may be an electric servomotor that drives the hydraulic pump 53 in a rotational direction with a rotational torque in response to a control signal from the control unit 70. The control unit 70 may control the motor 52 based on a detection result of the pressure sensor 55.

The hydraulic pump 53 includes a first port 53a and a second port 53b. The first port 53a is connected with the front chamber (first chamber) C1 of the main body 51a of the movement cylinder via a first passage CD1, and the second port 53b is connected with the rear chamber (second chamber) C2 of the main body 51a of the movement cylinder via a second passage CD2.

The hydraulic pump 53 is a pump that can rotate in both directions, and by switching the rotational direction of the motor 52, suctions the operating fluid (for example, oil) into one of the first port 53a and the second port 53b, and discharges the operating fluid from the other port to generate hydraulic pressure. Here, the hydraulic pump 53 may suction the operating fluid contained in the tank 54, and discharge the operating fluid from one of the first port 53a and the second port 53b.

If the operating fluid discharged from the first port 53a by the hydraulic pump 53 is supplied to the front chamber C1 via the first passage CD1, the front chamber C1 is expanded, and the main body 51a of the movement cylinder and the injection unit 40 are moved forward. With the expansion of the front chamber C1, the rear chamber C2 is reduced and the operating fluid in excess in the rear chamber C2 is suctioned into the second port 53b of the hydraulic pump 53 via the second passage CD2. After the nozzle 43 of the injection unit 40 comes into contact with the stationary mold 32, if the hydraulic pump 53 continues to supply the operating fluid into the front chamber C1, the front chamber C1 does not expand, the hydraulic pressure in the front chamber C1 rises, and the nozzle contact force is generated.

On the other hand, if the operating fluid discharged from the second port 53b by the hydraulic pump 53 is supplied to the rear chamber C2 via the second passage CD2, the main body 51a of the movement cylinder and the injection unit 40 are moved backward. With the expansion of the rear chamber C2, the front chamber C1 is reduced and the operating fluid in excess in the front chamber C1 is suctioned into the first port 53a of the hydraulic pump 53 via the first passage CD1.

The pressure sensor 55 is a sensor for detecting pressure in the first passage CD1 that connects the first port 53a of the hydraulic pump 53 with the front chamber C1 of the main body 51a of the movement cylinder, and outputs a detection result to the control unit 70. The pressure detected by the pressure sensor 55 is substantially the same as the hydraulic pressure in the front chamber C1 of the main body 51a of the movement cylinder, and represents the nozzle contact force when nozzle contacting is performed.

The first relief valve 56 opens if pressure in the first passage CD1 is over a setting value to return the operating fluid in excess in the first passage CD1 back to the tank 54 to keep the pressure in the first passage CD1 below the setting value.

The second relief valve 57 opens if pressure in the second passage CD2 is over a setting value to return the operating fluid in excess in the second passage CD2 back to the tank 54 to keep the pressure in the second passage CD2 below the setting value.

The switching valve 58 opens and closes the first passage CD1 in response to a control signal from the control unit 70. When moving the injection unit 40 forward or backward, the switching valve 58 opens the first passage CD1 to have the first port 53a of the hydraulic pump 53 and the front chamber C1 of the main body 51a of the movement cylinder communicate with each other. After the predetermined nozzle contact force is generated, the switching valve 58 closes the first passage CD1 to keep the nozzle contact force, with which the motor 52 can be stopped.

Incidentally, as the movement rod 51c penetrates through the front chamber C1, the cross-sectional area of the front chamber C1 is smaller than the cross-sectional area of the rear chamber C2. To adjust excess and deficiency of an amount of operating fluid circulation caused by the difference between the cross-sectional area of the front chamber C1 and the cross-sectional area of the rear chamber C2, the first check valve 61 and the second check valve 62 are disposed between the first passage CD1 and the second passage CD2. Also, a connection path that connects the first check valve 61 with the second check valve 62 is connected with the tank 54 via a drain passage CD3.

For example, if the movement cylinder 51 expands the front chamber C1 and reduces the rear chamber C2 to move the injection unit 40 forward, the operating fluid is discharged from the rear chamber C2. The amount of the operating fluid discharged from the rear chamber C2 is greater than the amount of the operating fluid supplied to the front chamber C1 because the cross-sectional area of the rear chamber C2 is greater than the cross-sectional area of the front chamber C1.

When the movement cylinder 51 moves the injection unit 40 forward, the hydraulic pump 53 suctions the operating fluid discharged from the rear chamber C2, and discharges it into the first passage CD1, which increases the operating fluid supplied into the first passage CD1, and raises hydraulic pressure in the first passage CD1. Consequently, the hydraulic pressure in the first passage CD1 operates on the second check valve 62 to open the second check valve 62. Therefore, the operating fluid discharged from the rear chamber C2 is returned to the tank 54 via the second check valve 62 and the drain passage CD3. Thus, excess and deficiency of the amount of operating fluid circulation can be adjusted.

Here, the hydraulic pressure circuit of the movement cylinder 51 may vary widely. For example, the switching valve 58 for opening and closing the first passage CD1 may not be a check-type switching valve, but a block-type switching valve. Also, the switching valve 58 for opening and closing the first passage CD1 may be omitted. By keeping on driving the motor 52, the nozzle contact force can be maintained.

A hydraulic pressure circuit of the compression cylinder 18 or a hydraulic pressure circuit of the ejector cylinder 19 can be configured similarly to the hydraulic pressure circuit of the movement cylinder 51, and its description is omitted.

Next, referring to the FIG. 1 again, a positional relationship among the motor 52, the hydraulic pump 53, and the tank 54 will be described.

The hydraulic pump 53 suctions the operating fluid in the tank 54 from an opening formed on the lower wall part of the tank 54. In the tank 54, bubbles in the operating fluid gather upwards due to buoyancy. Therefore, the operating fluid supplied from the opening formed on the lower wall part of the tank 54 to the hydraulic pump 53 hardly includes the bubbles, which can reduce vibration and noise of the hydraulic pump 53. Also, vibration and noise are also reduced at a part that is supplied with the operating fluid by the hydraulic pump 53 (for example, the main body 51a of the movement cylinder). Moreover, the direction in which the operating fluid flows out of the tank 54 coincides with the direction in which gravity works, hence stagnation can be prevented from forming in the tank 54.

The tank 54 may be disposed higher than the hydraulic pump 53. Gravity then forms a flow of the operating fluid toward the hydraulic pump 53 from the tank 54, which makes bubbles less likely to be generated on the way.

The main body 51a of the movement cylinder, the hydraulic pump 53, and the tank 54 are fixed relative to the injection frame 42, and move with the injection unit 40 as a movable part that can be moved relative to the frame 11. When the injection unit 40 moves, the positional relationship among the main body 51a of the movement cylinder, the hydraulic pump 53, and tank 54 remains unchanged. Therefore, it is easy to connect the hydraulic pump 53 with the main body 51a of the movement cylinder, and to connect the hydraulic pump 53 with the tank 54. The motor 52 may move with the injection unit 40.

If the main body 51a of the movement cylinder, the hydraulic pump 53, and the tank 54 move with the injection unit 40, the hydraulic pump 53 and the tank 54 are fixed at a place that is different from the place for the main body 51a of the movement cylinder.

The hydraulic pump 53 may be connected with the tank 54 via a pipe 67. The hydraulic pump 53 and the tank 54 are separated, which expands a degree of freedom for the places at which they are fixed because they each are small as individuals. Therefore, the hydraulic pump 53 can be fixed on a member with high rigidity (for example, the injection frame 42), hence vibration of the hydraulic pump 53 can be suppressed. Also, separation of the hydraulic pump 53 and the tank 54 makes vibration of the hydraulic pump 53 less likely to be transferred to the tank 54.

Here, although the hydraulic pump 53 is connected with the tank 54 via the pipe 67 according to the present embodiment, the hydraulic pump 53 and the tank 54 may be unified. This reduces the number of pipes, which makes it easier to connect the hydraulic pump 53 with the main body 51a of the movement cylinder. If the hydraulic pump 53 and the tank 54 are unified, it may be fixed on a bracket protruding from the injection frame 42. Moreover, the motor 52, the hydraulic pump 53, and the tank 54 may be unified to constitute a single hydraulic unit.

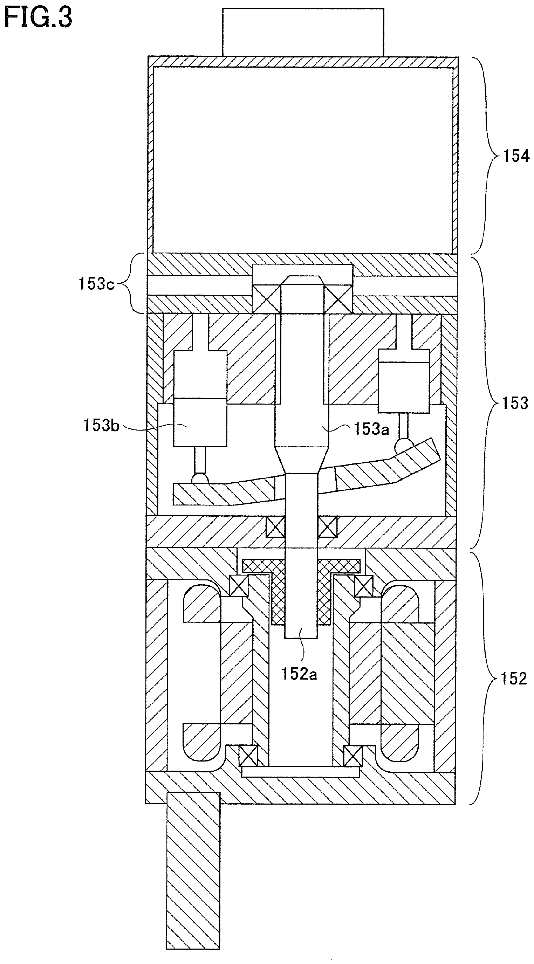

FIG. 3 is a schematic view illustrating a modified example of the hydraulic unit. In FIG. 3, a tank 154, a hydraulic pump 153, and a motor 152 are arranged in this order from top to bottom to be unified. An output shaft 152a of the motor 152 and a driving shaft 153a of the hydraulic pump 153 are coaxially interconnected. Pistons 153b are arrayed around the driving shaft 153a that move in parallel with the driving shaft 153a. Rotational motion of the driving shaft 153a produces reciprocal motion of the pistons 153b. The tank 154 is fixed on a valve plate 153c that controls a flow of the operating fluid of the hydraulic pump 153.

Here, although the motor 152 is disposed under the hydraulic pump 153 in the modified example illustrated in FIG. 3, the motor 152 may be disposed at a side of the hydraulic pump 153. For example, the motor 152 may be disposed at the side of a reciprocal piston pump whose pistons are arranged in a row and are moved vertically relative to a driving shaft. Also, the hydraulic pump 153 may not be a piston pump, but, for example, a gear pump, a vane pump, or the like.

As above, the embodiments of the injection molding machine have been described. Further, the present invention is not limited to these embodiments, but various variations and modifications may be made without departing from the scope of the present invention.

For example, although the injection molding machine 10 in the above embodiment includes multiple hydraulic actuators (the compression cylinder 18, the ejector cylinder 19, the movement cylinder 51, and the like), a single hydraulic actuator may be provided instead. Also, contents of the embodiments of the present invention can be applied to a mold clamping unit.

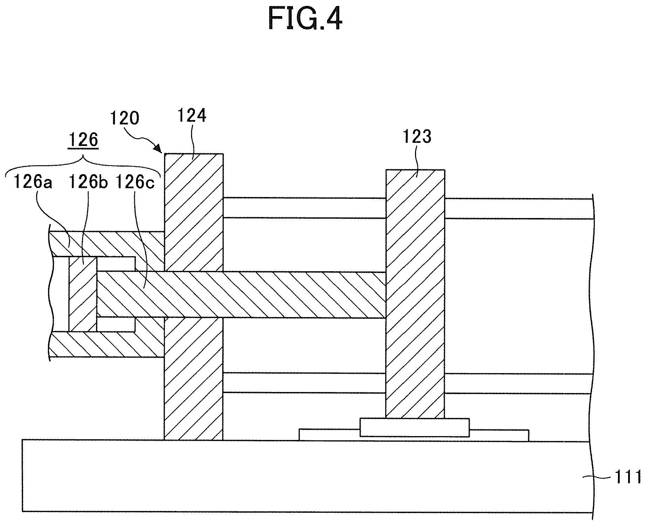

FIG. 4 is a schematic view illustrating a modified example of a mold clamping unit 120. The mold clamping unit 120 illustrated in FIG. 4 includes a mold clamping cylinder 126 as a hydraulic actuator that moves a movable platen 123 relative to a frame 111. The mold clamping cylinder 126 includes a cylinder-shaped main body 126a of the mold clamping cylinder attached to a rear platen 124, a mold clamping piston 126b that divides a space in the main body 126a of the mold clamping cylinder into a front chamber and a rear chamber, and a mold clamping rod 126c that moves with the mold clamping piston 126b. The tip of the mold clamping rod 126c is connected with the movable platen 123.

When an operating fluid is supplied into the rear chamber in the main body 126a of the mold clamping cylinder, and the operating fluid is discharged from the front chamber in the main body 126a, the mold clamping rod 126c moves forward, which moves the movable platen 123 forward. After completing mold closing, if the operating fluid is kept supplied into the rear chamber in the main body 126a of the mold clamping cylinder, the rear chamber does not expand, hydraulic pressure in the rear chamber rises, and a mold clamping force is generated. On the other hand, if the operating fluid is supplied into the front chamber in the main body 126a of the mold clamping cylinder, and the operating fluid is discharged from the rear chamber in the main body 126a, the mold clamping rod 126c moves backward, which makes the movable platen 123 move backward.

Here, although the mold clamping cylinder 126 of the modified example performs mold closing, mold clamping, and mold opening, a cylinder for mold closing and opening and a cylinder for mold clamping may be provided separately. Also, the main body 126a of the mold clamping cylinder and the mold clamping rod 126c may be placed interchangeably, in which the main body 126a of the mold clamping cylinder may be attached to the movable platen 123, and the tip of the mold clamping rod 126c may be connected with the rear platen 124. Also, the rear platen 124 may be omitted, and one of the main body 126a of the mold clamping cylinder and the mold clamping rod 126c may be fixed at a stationary platen (not shown) and the other may be fixed at the movable platen 123.

Also, although the hydraulic pump 53 in the above embodiment suctions the operating fluid in the tank 54 from the opening formed on the lower wall part of the tank 54, the present invention is not limited to that. If the tank is disposed higher than the hydraulic pump, the hydraulic pump may suction the operating fluid in the tank from an opening formed on a side wall part of the tank. If the tank is disposed higher than the hydraulic pump, gravity forms a flow of the operating fluid toward the hydraulic pump 53 from the tank 54, which makes bubbles less likely to be generated on the way.

Further, it should be understood that the invention is not limited to the above described embodiments, but may be modified into various forms on the basis of the scope of the invention.

## Claims

1. An injection molding machine (10) comprising:
a hydraulic pump (53) configured to generate hydraulic pressure being supplied to a hydraulic actuator (18, 19, 51; 126); and
a tank (54) configured to contain an operating fluid being supplied to the hydraulic pump (53), **characterized in that**
the hydraulic pump suctions the
operating fluid in the tank from an opening formed on a lower wall part of the tank,
further comprising a pipe configured to connect the tank (54, 154) with the hydraulic pump (53), wherein the hydraulic pump (53) and the tank (54) are separated.

2. The injection molding machine (10) as claimed in claim 1, wherein the tank (54) is disposed higher than the hydraulic pump.

3. The injection molding machine (10) as claimed in any one of claims 1 to 2, further comprising:
a movable part (40, 123) configured to be movable relative to a frame (11, 111),
wherein the hydraulic actuator includes a main body (18a, 19a, 51a; 126a) of a cylinder being fixed at the movable part,
wherein the main body of the cylinder, the hydraulic pump, and the tank move with a movement of the movable part.

## Patentansprüche

1. Spritzgießmaschine (10), umfassend:
eine Hydraulikpumpe (53), die konfiguriert ist, um hydraulischen Druck zu erzeugen, der einem hydraulischen Stellglied (18, 19, 51; 126) zugeführt wird; und
einen Tank (54), der konfiguriert ist, um ein Betriebsfluid zu beinhalten das der Hydraulikpumpe (53) zugeführt wird, **dadurch gekennzeichnet, dass**
die Hydraulikpumpe das Betriebsfluid in dem Tank aus einer Öffnung ansaugt, die an einem unteren Wandteil des Tanks ausgebildet ist,
weiter umfassend ein Rohr, das konfiguriert ist, um den Tank (54, 154) mit der Hydraulikpumpe (53) zu verbinden, wobei die Hydraulikpumpe (53) und der Tank (54) getrennt sind.

2. Spritzgießmaschine (10) nach Anspruch 1, wobei der Tank (54) höher als die Hydraulikpumpe angeordnet ist.

3. Spritzgießmaschine (10) nach einem der Ansprüche 1 bis 2, weiter umfassend:
ein bewegliches Teil (40, 123), das konfiguriert ist, um relativ zu einem Rahmen (11, 111) beweglich zu sein,
wobei das hydraulische Stellglied einen Hauptkörper (18a, 19a, 51a; 126a) eines Zylinders einschließt, der an dem beweglichen Teil befestigt ist,
wobei sich der Hauptkörper des Zylinders, die Hydraulikpumpe und der Tank mit einer Bewegung des beweglichen Teils bewegen.

## Revendications

1. Machine de moulage par injection (10) comprenant :
une pompe hydraulique (53) configurée pour générer une pression hydraulique qui est fournie à un actionneur hydraulique (18, 19, 51 ; 126) ; et
un réservoir (54) configuré pour contenir un fluide de travail qui est fourni à la pompe hydraulique (53),
**caractérisée en ce que**
la pompe hydraulique aspire le fluide de travail dans le réservoir à partir d'une ouverture formée sur une partie de paroi inférieure du réservoir,
comprenant en outre un tuyau configuré pour raccorder le réservoir (54, 154) à la pompe hydraulique (53), dans laquelle la pompe hydraulique (53) et le réservoir (54) sont séparés.

2. Machine de moulage par injection (10) selon la revendication 1, dans laquelle le réservoir (54) est disposé plus haut que la pompe hydraulique.

3. Machine de moulage par injection (10) selon la revendication 1 à 2, comprenant en outre :
une partie mobile (40, 123) configurée pour être mobile par rapport à un cadre (11, 111),
dans laquelle l'actionneur hydraulique inclut un corps principal (18a, 19a, 51a ; 126a) d'un cylindre qui est fixé à la partie mobile,
dans laquelle le corps principal du cylindre, la pompe hydraulique, et le réservoir se déplacent avec un mouvement de la partie mobile.
